# EUROPEAN PATENT SPECIFICATION

(11) **EP 1 764 949 B1**
(45) Date of publication and mention of the grant of the patent: **21.07.2010**
(21) Application number: 06018648.3
(22) Date of filing: 06.09.2006
(51) Int. Cl.: H04L 12/24

(54) **Management of network device based on operation history**
Verwaltung von Netzvorrichtung basierend auf der Betriebsgeschichte
Gestion de dispositifs de réseau basée sur l'historique du fonctionnement

(30) Priority: 16.09.2005 JP 2005270409
(43) Date of publication of application: 21.03.2007
(73) Proprietor: CANON KABUSHIKI KAISHA, Ohta-ku Tokyo (JP)
(72) Inventor: Mori, Shigeki, Ohta-ku, Tokyo (JP); Wakai, Masanori, Ohta-ku, Tokyo (JP)
(74) Representative: Weser, Wolfgang

(56) References cited:
- EP-A2- 1 191 758
- WO-A-2005/060161
- JP-A- 2004 185 607
- JP-A- 2004 185 612
- JP-A- 2004 199 667

## Description

### BACKGROUND OF THE INVENTION

### Field of the Invention

The present invention relates to a network system, network management device and management method thereof, for managing information related to operations performed at a plurality of devices on a network, and information related to communications performed between the devices.

### Description of the Related Art

Conventionally, there is a related art in which, in a network system to which a plurality of devices are connected, if a user uses an operation history of each device, the operation history retained individually in the device is presented to the user who has accessed. And the relate art provides a mechanism for executing an operation history which the user has selected from the above described operation history as appropriate, as an operation action repeatedly again.

Moreover, there is also another related art
in which, by managing the operation history at a server and the like in the network in a centralized fashion and performing a specific operation by the user, history information corresponding to an individual device, or operation history information corresponding to the plurality of devices which has been accumulated in chronological order is presented with respect to the user. And the related art provides a mechanism for executing an operation history selected by the user as appropriate, as the operation action repeatedly again (for example, see Prior Art Document 1).

In any of the above described cases, the operation history is used as means for reducing a burden on a user operation with respect to an operation which is frequently performed and the like, by storing the operation history of the individual device and executing its operation history as the operation action as appropriate.

Moreover, for the plurality of devices connected to the network, several techniques for using the operation history of each device and enabling a cooperative operation among the plurality of devices have been disclosed (for example, see Prior Art Documents 2 and 3).

In Prior Art Document 2, a technique for integrating and recording the operation history from the user's device with respect to another device, and the user's status at that time, such as a reaction timing, frequency, time and the like with respect to data sent from another device to the user's device, has been disclosed. Furthermore, a technique has been disclosed, in which according to the user's current status, if it is determined to be a timing for the user's device to request another device to send data, the operation history of the user is previously executed as the operation action.

Moreover, in Prior Art Document 3, a mechanism for executing as a cooperative operation action among the plurality of devices has been disclosed. There is provided a mechanism for accumulating operation information on each device in the network system and concurrently exchanging the above described operation information mutually among the devices. Information on operations performed in the same time slot and the accumulated operation information on another device are extracted as a related operation history. Its result is exchanged mutually with another device, and a result interpreted in the device is presented to the user as the related operation history. In the result, the cooperative operation selected by the user is sent to the respective devices.

It should be noted that the above described Prior Art Documents 1 to 3 are the following documents:
Prior Art Document 1: Japanese Patent Laid-Open No. 2004-185612;
Prior Art Document 2: Japanese Patent Laid-Open No. 2004-199667; and
Prior Art Document 3: Japanese Patent Laid-Open No. 2004-185607.

Moreover, Document WO 2005/060161 discloses changing a communication path based on communication history.

However, in the above described network system, it has been impossible to execute the operation action as a strict cooperative operation among the devices, with respect to the operation histories which have been accumulated in the plurality of devices connected to the network.

With respect to the individual device connected to the network, if an individual operation history is retained, it is necessary to select with respect to the individual operation history and execute it as the operation action, in order for the user to perform the cooperative operation by using the operation history. As a result, since a timing of the operation is different from that of a user operation which has been a basis of the history, not only it does not become a strict repetitive operation action, but also it has been impossible to duplicate the same operation from the operation history, with respect to the operation which needs to be operated alternately for the plurality of devices and the like.

Furthermore, in Prior Art Document 1, it is possible to execute the repetitive operation action by presenting the operation history information to the user and using the operation history, at one place which is managed in a centralized fashion. Moreover, there is an advantage in which it is possible to duplicate even a history which has been operated alternately among the plurality of devices.

However, with respect to the operation action based on the operation histories with respect to the plurality of devices, grounds for making the operation as the cooperative operation exists in the operations which have been performed consecutively in chronological order in past times. Thus, even an operation which has been performed incidentally by the user and is completely unrelated and independent, is processed as the history of the cooperative operation related to the devices. As a result, there has been a problem in which not only the history is presented to the user as a false operation history, but also the history cannot be used as an effective operation history.

Furthermore, in Prior Art Document 2, since a specific user's status occurs, there is an advantage in which it is possible to execute the operation action by using the operation history, without particularly performing any operation by the user. However, similarly to the above described example, in the case where the operation action of the operation histories with respect to the plurality of devices is performed, a timing of performing the operation action is not decided accurately. Alternatively, if the operation action based on the accumulated operation histories which are cooperative among the plurality of devices has not been performed accurately, communication traffic which is completely wasteful occurs in the network system. In addition, there also has been a problem in which a disadvantage such as an unnecessary charge is given to the user.

Furthermore, in Prior Art Document 3, since an actual user operation among the plurality of devices is accumulated and used as the related operation history with the time slot, in which the actual user operation has been operated, as the basis, there also has been a problem in which it becomes impossible to associate the operation history strictly among the devices.

Even in the case of the operation which has been performed in the same time slot, an operation performed incidentally by the user with respect to an unrelated device during a series of operations which are cooperative among the devices, and a plurality of operations between which a long time is inserted, such as operations performed before and after viewing a movie, become inaccurate operation histories. As a result, even if the history information is presented to the user, the history information has had no utility value as the repetitive operation action.

### SUMMARY OF THE INVENTION

It is an object of the present invention to make it possible to, when an operation accompanied with a communication has been performed at a device, execute a predetermined action corresponding to the above described operation accompanied with the communication, by associating and managing the operation performed at the device and the communication between devices.

In order to achieve the above described object, according to an aspect of the present invention, there is provided a method for controlling execution of operations on a network as claimed in claim 1.

Moreover, according to another aspect of the present invention, there is provided the network management device claimed in claim 11.

Moreover, according to another aspect of the present invention, there is provided a plurality of devices connectable via a network as claimed in claim 12.

The other claims relate to further developments.

Further features of the present invention will become apparent from the following description of exemplary embodiments (with reference to the attached drawings).

### BRIEF DESCRIPTION OF THE DRAWINGS

FIG. 1 is a diagram showing an example of a configuration of a network system in the first embodiment;

FIG. 2 is a diagram showing operation history information in which information related to operations of respective devices on a network has been obtained and recorded in a short term in a network management device 109;

FIG. 3 is a diagram showing communication status history information in which information related to communication statuses on the network has been obtained and recorded in a short term in the network management device 109;

FIG. 4 is a block diagram showing a process related to extracting and accumulating the history information in the network management device 109;

FIGS. 5A and 5B are flowcharts showing a process of extracting communication related operation histories in the first embodiment;

FIG. 6 is a diagram describing the operations and the communication statuses of the respective devices in order of time, which have been detected on the network in a time proximity to the time when a communication of a communication status history C which is one of the communication status history (FIG. 3) has been performed;

FIG. 7 is a diagram showing the communication related operation histories which have been extracted and stored from information shown in FIG. 6 after the extraction process shown in FIGS. 5A and 5B has been completed;

FIG. 8 is a diagram in which a description of the communication related operation histories shown in FIG. 7 is simplified and also other communication related operation histories, which are identical operation histories until partway, are integrated with a hierarchical display;

FIG. 9 is a block diagram showing a process related to execution of an operation action in the first embodiment;

FIG. 10 is a flowchart showing a process of executing the operation action based on the operation histories;

FIG. 11 is a diagram showing a series of operations performed at the device;

FIG. 12 is a flowchart showing a process at step S1010 shown in FIG. 10;

FIG. 13 is a diagram showing operation actions to be issued onto the network by the process shown in FIG. 12, in the case where the operations and the communication status shown in FIG. 11 have occurred;

FIGS. 14A and 14B are block diagrams showing a process of extracting and accumulating an operation related to a communication which is related to an individual device, as the operation history within the device itself;

FIG. 15 is a diagram showing the communication related operation histories which have been extracted and accumulated within the device;

FIG. 16 is a diagram in which a description of the communication related operation histories shown in FIG. 15 is simplified and also other communication related operation histories, which are the identical operation histories until partway, are integrated with a hierarchical display;

FIGS. 17A and 17B are block diagrams showing a process related to execution of the operation action in the second embodiment;

FIG. 18 is diagram showing a series of operations executed in the individual device;

FIG. 19 is a diagram showing configurations of communication status 1901 and additional information 1902; and

FIG. 20 is a diagram showing operation actions 2001 to 2003 to be issued on the network.

### DESCRIPTION OF THE EMBODIMENTS

Hereinafter the best mode for carrying out the invention will be described in detail, with reference to the drawings.

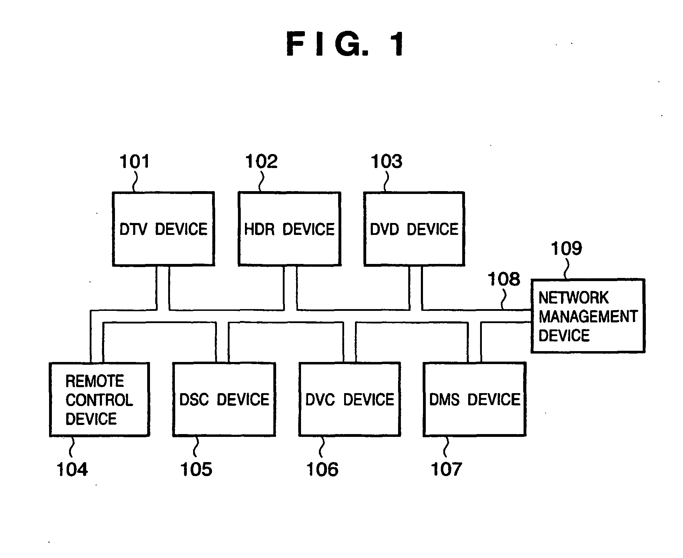

[First Embodiment]
FIG. 1 is a diagram showing an example of a configuration of a network system in the first embodiment. In FIG. 1, reference numeral 101 denotes a DTV device (digital television). Reference numeral 102 denotes a HDR device (hard disk recorder). Reference numeral 103 denotes a DVD device (Digital Versatile Disc). Reference numeral 104 denotes a remote control device. Reference numeral 105 denotes a DSC device (digital still camera). Reference numeral 106 denotes a DVC device (digital video camera). Reference numeral 107 denotes a DMS device (digital media server device). These devices are connected to a network 108 respectively. Reference numeral 109 denotes a network management device, which realizes various services using operation histories according to the present invention by managing operation information on each device flowing on the network 108 or information on data flowing between the devices.

Here, the devices 101 to 107 realize various functions by being stand-alone respectively or connected to one another. For example, the DVD device 103 displays a GUI (graphical user interface) on the DTV device 101, and enables an operation on the DVD device 103. Moreover, by accepting a user operation with the remote control device 104, the user is provided with convenience of not being limited to a place where the device exists or a UI which the device itself has.

Here, a method will be described in which the network management device 109 associates operations performed at the plurality of devices 101 to 107 shown in FIG. 1 and communications performed between the devices, and manages them as a series of communication related operation history information.

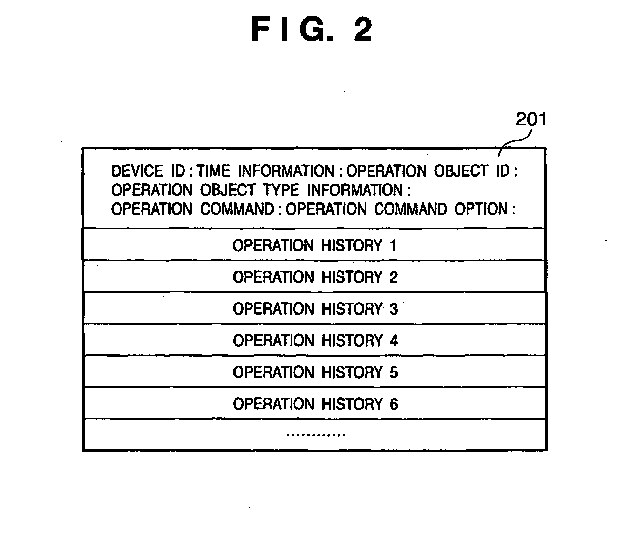

FIG. 2 is a diagram showing operation history information in which information related to the operations of the respective devices on the network has been obtained and recorded in a short term in the network management device 109. As shown in FIG. 2, operation history information 201 includes information such as a device ID, time information, an operation object ID, operation object type information, an operation command, an operation command option and the like. The device ID is identification information indicating which device the operation information is on, and the time information is a time in which the operation has been performed. The operation object ID is identification information on an object which has been an object of the operation, and the type information is information indicating a type of the object which has been the object of the operation. The operation command is command information indicating the operation, and the operation command option is option information used along with the operation command.

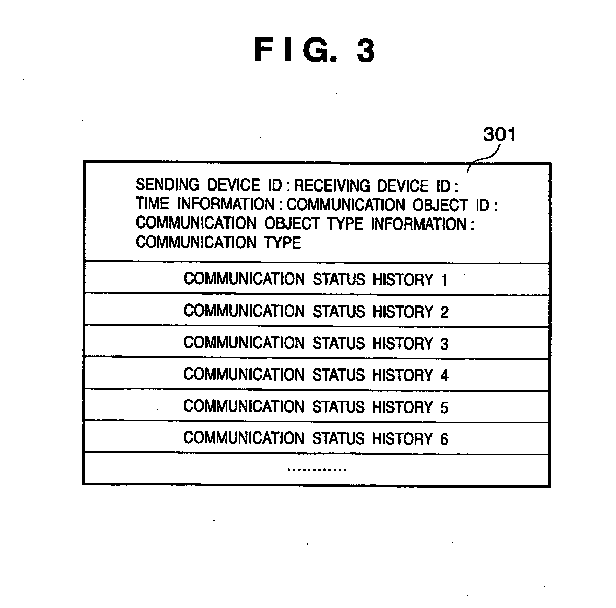

FIG. 3 is a diagram showing communication status history information in which information related to communication statuses on the network has been obtained and recorded in a short term in the network management device 109. As shown in FIG. 3, communication status history information 301 includes information such as a sending device ID, a receiving device ID, time information, a communication object ID, a communication object type information, a communication type and the like. The sending device ID is identification information indicating a sending destination device of the communication, and the receiving device ID is identification information showing a receiving destination device of the communication. The time information is a time in which the operation has been performed, and the communication object ID is identification information on an object which has been communicated. The communication object type information is information indicating a type of the object which has been communicated, and the communication type is information indicating a type of the communication itself.

First, a process will be described in which the above described operation history information and the communication status history information are obtained, and from these information, only a series of operations related to communicated data is extracted and accumulated as the communication related operation history information, in the device related to the performed communication.

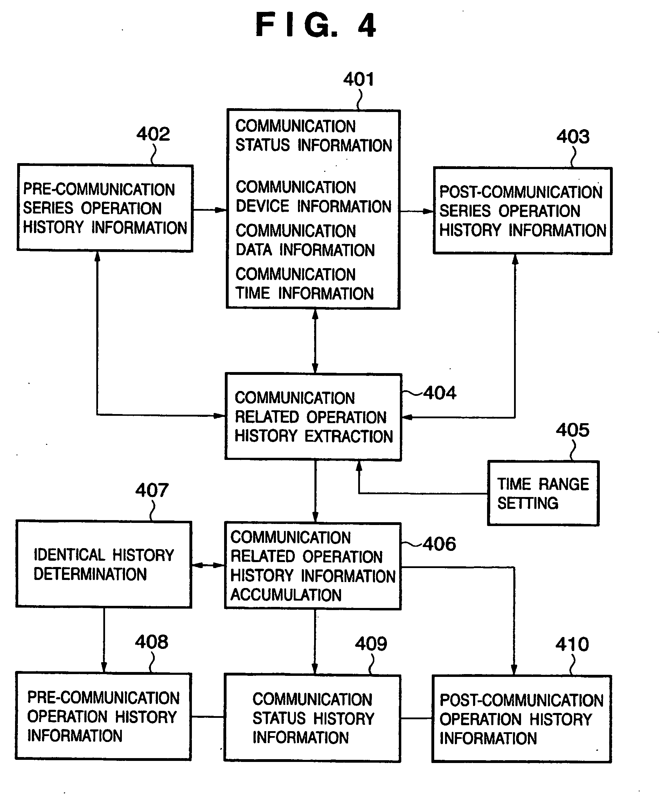

FIG. 4 is a block diagram showing a process related to extracting and accumulating the history information in the network management device 109. In FIG. 4, reference numeral 401 denotes communication status information, which is one of the communication status information (301 shown in FIG. 3) detected by the network management device 109. Reference numeral 402 denotes pre-communication series operation history information, which is the history information (FIG. 2) on a series of operation information which has been detected by the network management device 109 before a communication, when this communication has been started. Reference numeral 403 denotes post-communication series operation history information, which is the history information (FIG. 2) on a series of operation information which has been detected by the network management device 109 after this communication has been completed.

Reference numeral 404 denotes a communication related operation history extraction unit, which extracts only the operation history information related to the communications within a time range set by a time range setting unit described below, from the pre-communication series operation history information 402, the post-communication series operation history information 403, and the communication status information 401. Reference numeral 405 denotes the time range setting unit, which sets the time range before and after when a predetermined communication has been performed.

Reference numeral 406 denotes a communication related operation history information accumulation unit, which classifies the operation history information extracted by the communication related operation history extraction unit 404 into the operation history information before the communication is started, the operation history information after the communication is completed, and the communication status history information. Reference numeral 407 denotes an identical history determination unit, which determines whether or not history information identical with the operation history information before the communication is started exists in the operation history information related to the communications which has been already accumulated. Moreover, the identical history determination unit 407 is configured to layer, classify and accumulate operation histories which are identical until partway, as a result of the determination.

Reference numeral 408 denotes pre-communication operation history information. The pre-communication operation history information 408 is the operation history information before the communication is started, which has been classified by the communication related operation history information accumulation unit 406 and determined by the identical history determination unit 407. Reference numeral 409 denotes communication status history information, and reference numeral 410 denotes post-communication operation history information. Both of the information 409 and 410 are the history information which has been classified by the communication related operation history information accumulation unit 406.

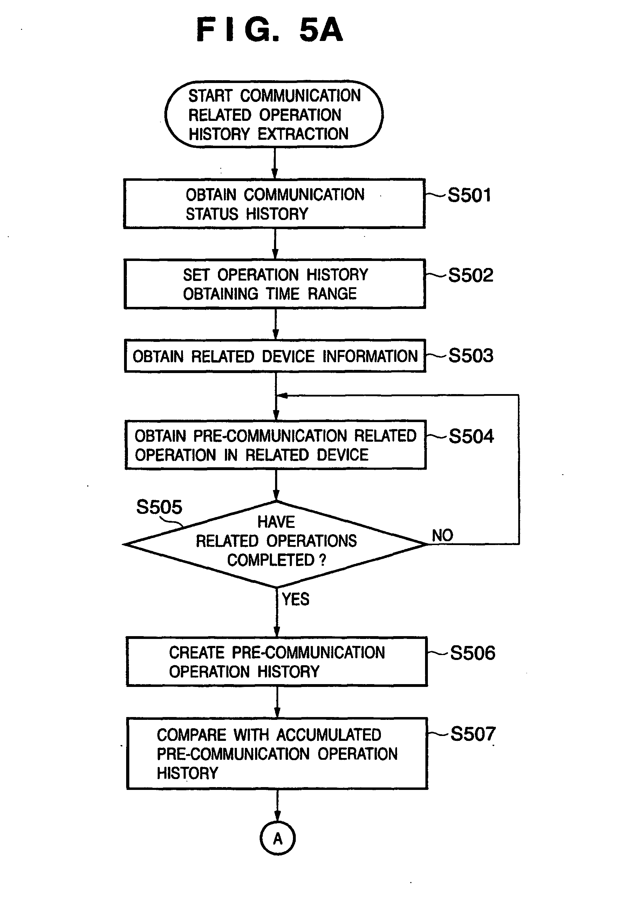

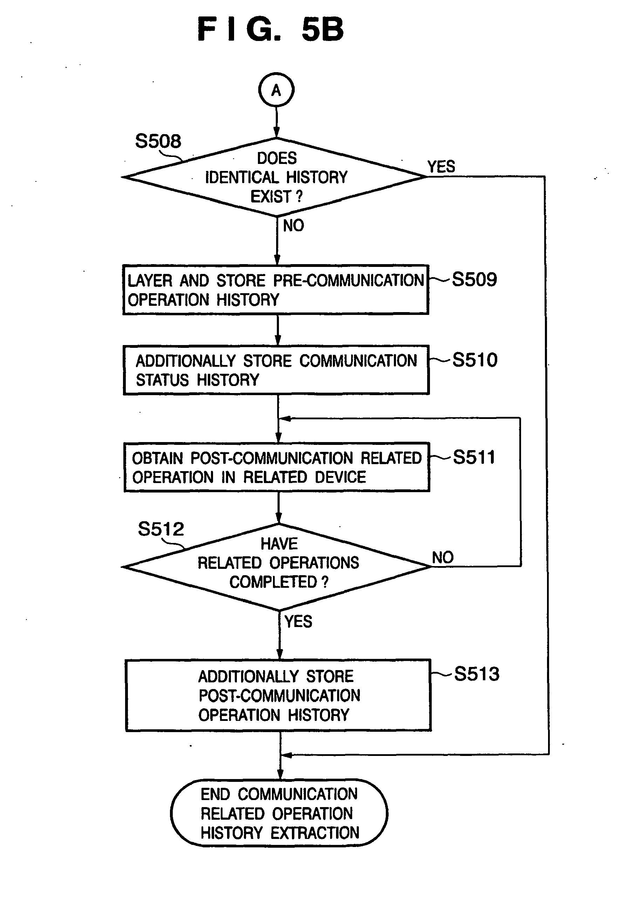

Here, by using FIGS. 5A and 5B, a process of extracting the communication related operation histories by the communication related operation history extraction unit 404 in the network management device 109 would be described. This process is a process which is performed based on the communication status information 301 and the operation history information 201, after the time set by the time range setting unit 405 has elapsed since one communication has been completed and one of the communication status information 301 which corresponds to the communication has been obtained.

FIGS. 5A and 5B are flowcharts showing the process of extracting the communication related operation histories in the first embodiment. First, at step S501, one of the communication status information 301 is obtained. Next, at step S502, a specific time range before and after when the communication has been performed is set in order to limit the operation histories. At step S503, based on the communication status information, only the operation history of the device related to the communication is obtained. Next, at step S504, the operation history information related to information contents of the communication before the communication has been performed is obtained. At step S505, in the range which has been limited previously, it is determined whether or not rest of the operation histories exist. Here, if the rest of the operation histories exist, the process returns to step S504, and a further previous operation history related to the information contents of this communication is obtained.

Moreover, at step S505, if all of the operation histories related to this communication which have existed before the communication have been obtained, the process proceeds to step S506, where this series of operation history information is arranged in order of time to make it as the pre-communication operation history information. Next, at step S507, the pre-communication operation history created at step S506 is compared with the pre-communication operation history information which has been already accumulated. At step S508, if the identical operation history has already existed, this process is terminated.

Moreover, if the identical operation history has not existed, the process proceeds to step S509, and the operation history is layered and stored together with the pre-communication operation history information which has already existed. Next, at step S510, the communication status history obtained at step S501 is stored in a form associated with the pre-communication operation history stored at step S509. At step S511, the operation history information related to the information contents of the communication after the communication has been performed, which has been limited at steps S502 and S503, is obtained. At step S512, in the range which has been limited previously, it is determined whether or not the rest of the operation histories exist. Here, if the rest of the operation histories exist, the process returns to step S511. and the operation history related to the information contents of the next communication is obtained.

Moreover, at step S512, when all of the related operations are obtained, the process proceeds to step S513. At step S513, the series of operation history information obtained at step S511 is arranged in order of time, and stored as a post-communication operation history in a form associated with the communication status history stored at step S510. Then this process is terminated.

In this way, by associating the communication status history information and the operation history information with each other and managing them, it becomes possible to extract related history information based on the history information on each other.

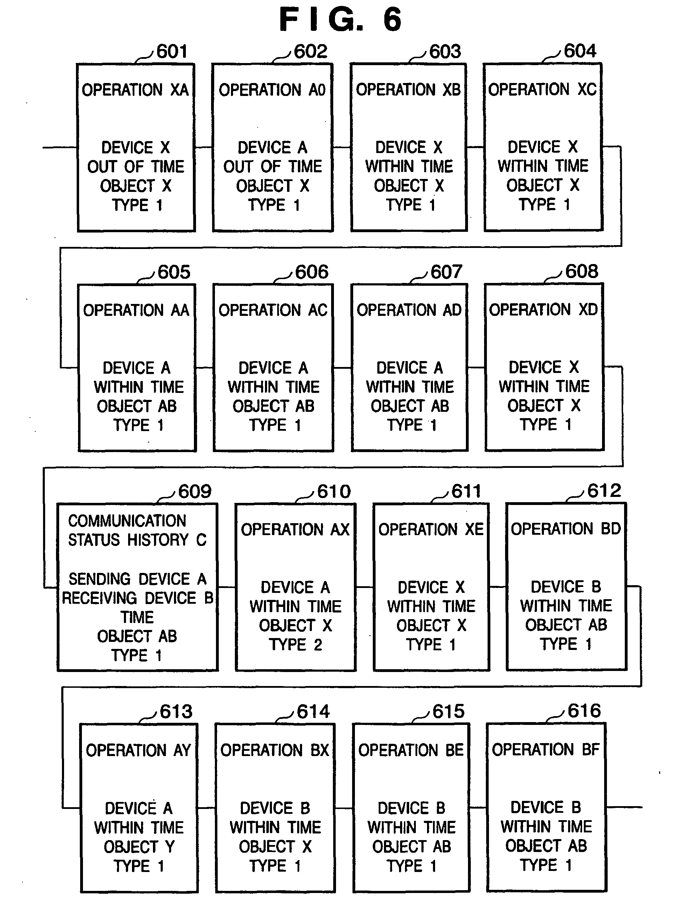

FIG. 6 is a diagram describing the operations and the communication statuses of the respective devices in order of time, which have been detected on the network in a time proximity to the time when a communication of a communication status history C which is one of the communication status history (FIG. 3) has been performed. In FIG. 6, reference numerals 601 to 608 and 610 to 616 are the operation histories for retaining names of the devices of the objects to which the operations have been performed, the time information in which the operations have been performed, information on the objects of the operations, the operation object type information and the like. Reference numeral 609 is the communication status history for retaining communication sending device information, communication receiving device information, the time information in which the operation has been performed, information on the communicated objects, type information on the communicated objects and the like.

Here, if the communication which becomes a basis of the communication status history shown in FIG. 6 has been performed, and the time set by the time range setting unit 405 has elapsed after the communication is completed, the process of extracting the communication related operation history shown in FIGS. 5A and 5B is started.

When this extraction process is started, at step S501, the communication status history C shown in FIG. 6 is obtained. Next, at step S502, the time range for obtaining the operation histories is set, based on the time range set on the basis of a starting time and an ending time of the communication which becomes the basis of the communication status history C. Here, among the operation histories of the respective devices which have been detected on the network, an object range of the operation history information, which exists in a certain time range before the communication is started and a certain time range after the communication is completed, is set. As a result, among the operation histories shown in FIG. 6, 601 and 602, which become out of the object range of the above described times, are eliminated from the operation history information related to this communication.

Next, at step S503, information on the devices related to this communication is obtained from the communication status history. Here, it is found that this communication is a communication which has been sent from a device A to a device B. As a result, among the operation histories shown in FIG. 6, 603, 604, 608 and 611, which are the operation history information other than on the device A and the device B, are eliminated from the operation history information related to this communication.

Next, the process at steps S504 and S505 is repeated, and among the devices related to the above described communication, only the operations, in which an operation object matches with a communication object, and which has been performed before this communication, are obtained sequentially. As a result of this process, the operation histories of 605, 606 and 607 are obtained. At step S506, the operation histories obtained at step S504 are arranged in order of time and a provisional pre-communication operation history is created.

Next, at step S507, the pre-communication operation history which has been already accumulated is compared with the provisional pre-communication operation history created at step S506. At step S508, if an identical series of pre-communication operation history has already existed, the process is terminated. If the identical series of pre-communication operation history has not existed, the process proceeds to step S509. At step S509, the operation histories are layered for each individual operation information, and stored as the pre-communication operation history.

Next, at step S510, the communication status history obtained at step S501 is stored as the communication status history associated with the pre-communication operation history stored at step S509.
In repeating steps S511 and S512, among the devices related to this communication, only the operations, in which the operation object matches with the communication object, and which has been performed after this communication, are obtained sequentially. As a result of this process, the operation histories of 612, 615 and 616 are obtained. At step S513, the operation histories are stored as the post-communication operation history associated with the communication status history which has been previously stored. Then this process is terminated.

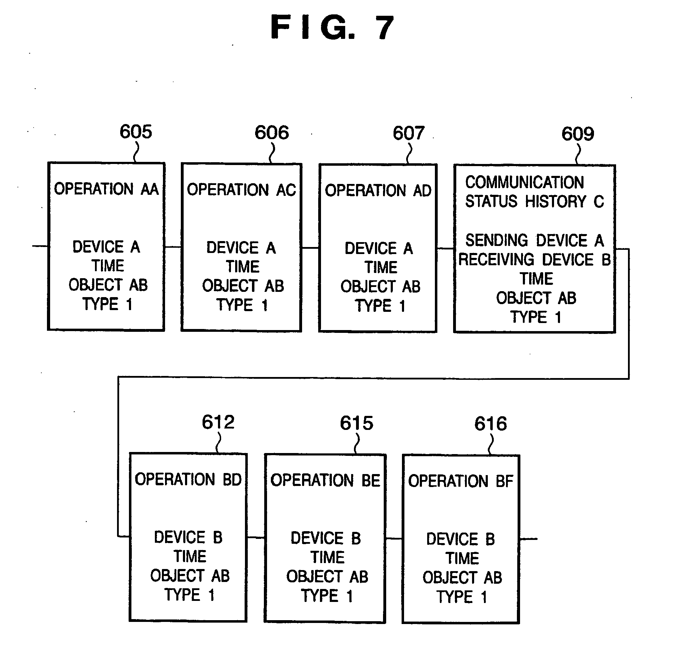

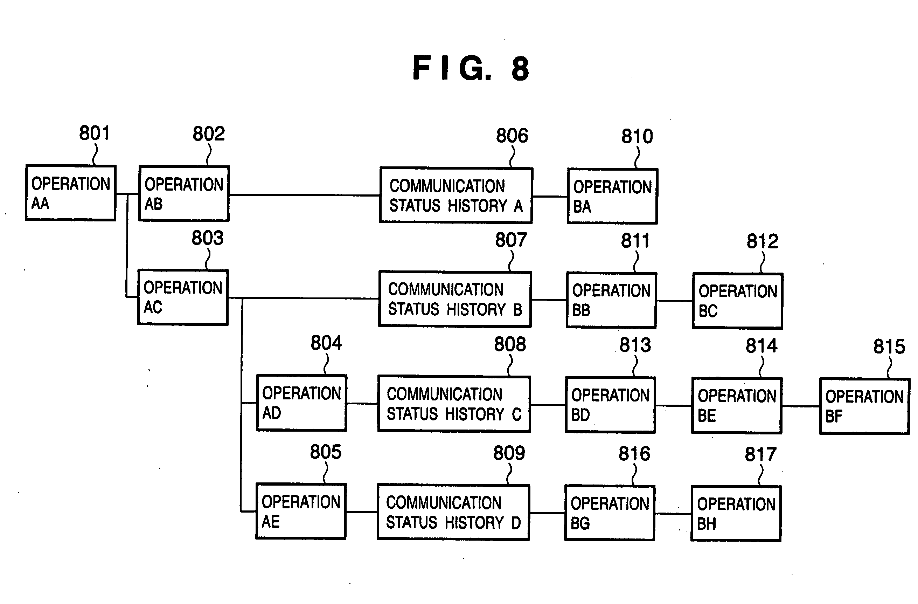

FIG. 7 is a diagram showing the communication related operation histories which have been extracted and stored from the information shown in FIG. 6 after the extraction process shown in FIGS. 5A and 5B has been completed. Moreover, FIG. 8 is a diagram in which a description of the communication related operation histories shown in FIG. 7 is simplified and also other communication related operation histories, which are identical operation histories until partway, are integrated with a hierarchical display. In other words, operation histories having an operation 801 at the beginning are layered, and the operation 801 is an operation AA in the device A, in which the operation object is AB and the operation object type is 1. Moreover, the extracted communication related operation histories shown in FIG. 7 are described and accumulated as 801, 803, 804, 808, 813, 814 and 815 in FIG. 8.

In other words, if the history information to be managed increases, a new association becomes possible with respect to the operations which have been treated as the same operations or communications conventionally, by serially subdividing the information on the operations or the communication status information.

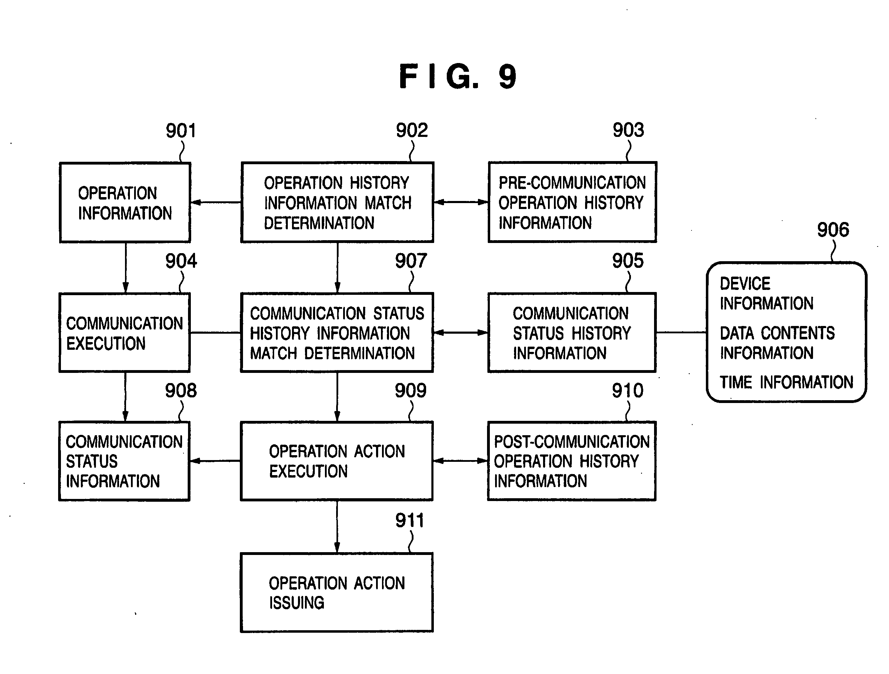

Next, by using FIG. 9, a process of executing an operation action by using the accumulated communication related operation history information in the network management device 109 will be described. This process is a process which is performed by using the communication related operation history information, when the operation information, which is detected on the network in a state where the communication related operation history information has been already accumulated, is compared with this communication related operation history information, and if those conditions match with each other.

FIG. 9 is a block diagram showing a process related to execution of the operation action in the first embodiment. In FIG. 9, an operation history information match determination unit 902 compares operation information 901 detected on the network with pre-communication operation history information 903 which has been already accumulated, and determines whether or not they match with each other. Here, if it is determined that they match with each other, furthermore a communication status history information match determination unit 907 compares communication status information 908 which has been communicated by a communication execution unit 904 with communication status history information 905 and 906 which have been already accumulated, and determines whether or not they match with each other. Here, if it is also determined that they match with each other, an operation action execution unit 909 executes the operation action based on post-communication operation history information 910. An operation action unit 911 issues the operation action.

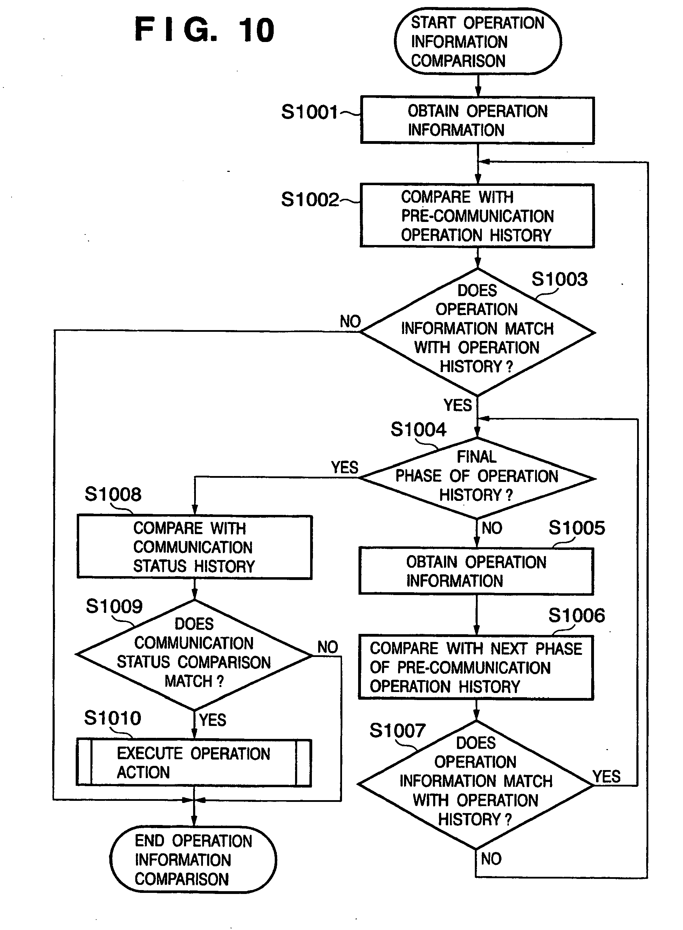

FIG. 10 is a flowchart showing a process of executing the operation action based on the operation histories. This process is a process which is performed when the operation information has been detected on the network, based on the above described operation information, in the network management device 109.

First, at step S1001, the operation history information match determination unit 902 obtains the operation information 901 detected on the network. At step S1002, the pre-communication operation history information 903 which has been accumulated in the network management device 109 and the operation information 901 obtained at step S1001 are compared. Next, at step S1003, a result of the comparison is determined. If they do not match with each other, this process is terminated.

Moreover, at step S1003, if it is determined that they match with each other, the process proceeds to step S1004, where it is determined whether or not the matched operation information 901 is a final phase of the pre-communication operation history information 903. Here, if the matched operation information 901 is not the final phase, the process proceeds to step S1005, and the next operation information is obtained. At step S1006, similarly to step S1002, the operation information 901 is compared with the operation history information on the next phase of the pre-communication operation history information 903 which has been already accumulated. At step S1007, if they do not match with each other, the process returns to step S1002, and the operation information 901 is compared with a first phase of the pre-communication operation history information. Moreover, at step S1007, if it is determined that they match with each other, the process returns to step S1004, and it is determined whether or not it is the final phase. If it is not the final phase, the process at steps S1005 to S1007 is repeated.

On the other hand, at step S1004, if it is determined that the matched operation information 901 matches with the pre-communication operation history information 903 which has been already accumulated, until the final phase thereof, the process proceeds to step S1008. At step S1008, the communication status information 908 which has occurred newly and the communication status information 905 which has been accumulated are compared. At step S1009, if it is determined that these communication statuses match with each other, the process proceeds to step S1010, and the operation action is executed. Moreover, at step S1009, if it is determined that these communication statuses do not match with each other, the process is terminated.

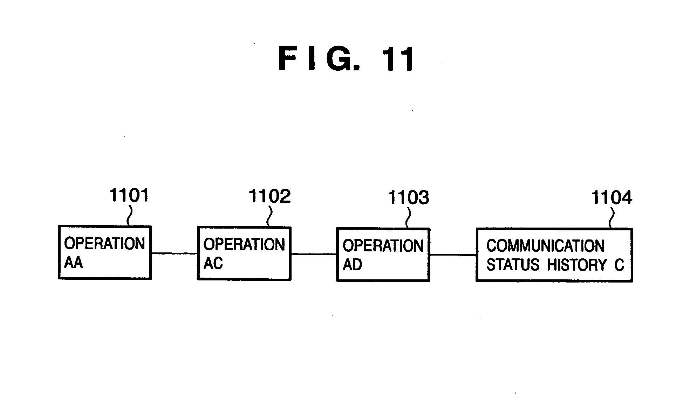

Here, the process shown in FIG. 10 will be described, by way of example, in the case where operations 1101 to 1103 shown in FIG. 11 are actually performed and consequently a communication status 1104 has occurred in the network system.

First, when the network management device 109 has detected operation information 1101, this process is started. At step S1001, the operation information 1101 is obtained. At step S1002, the operation information 1101 is compared with the communication related operation history (801 shown in FIG. 8) which has been accumulated. Next, at step S1003, it is determined that they match with each other. The process proceeds to step S1004, and since the operation information 1101 is not the final phase, the process proceeds to step S1005. At this step S1005, operation information 1102 which has been performed next is obtained. At step S1006, the operation information 1102 is compared with the operation history information on the next phase (802 and 803 shown in FIG. 8). At step S1007, it is determined that they match with each other, and the process returns to step S1004. Again at step S1005, operation information 1103 is obtained.

Next, at step S1006, the operation information 1103 is compared with the operation history information on the next phase (804 and 805 shown in FIG. 8). At step S1007, it is determined that they match with each other, and the process returns to step S1004. Here, since the operation information 1103 is the final phase, the process proceeds to step S1008. At this step S1008, communication status 1104 on a communication which has been performed newly and the communication status history (808 shown in FIG. 8) are compared. At step S1009, it is determined that they match with each other, the process proceeds to step S1010, and the operation action is executed.

As described above, it is possible to identify the operation to be performed later by detecting an identity of the operations, and to execute a post-communication operation with the operation action with respect to the operation which is repeatedly performed.

Moreover, by determining an identity of the communications based on the communication status history information, it becomes possible to extract more precisely a cooperative operation based on the operation histories of the related devices, and it is possible to execute an appropriate operation action.

In this way, by using the communication status history information, also with respect to the operation histories which are temporally separated, it becomes possible to extract certainly the cooperative operation of the related devices, and it is possible to execute the operation action certainly.

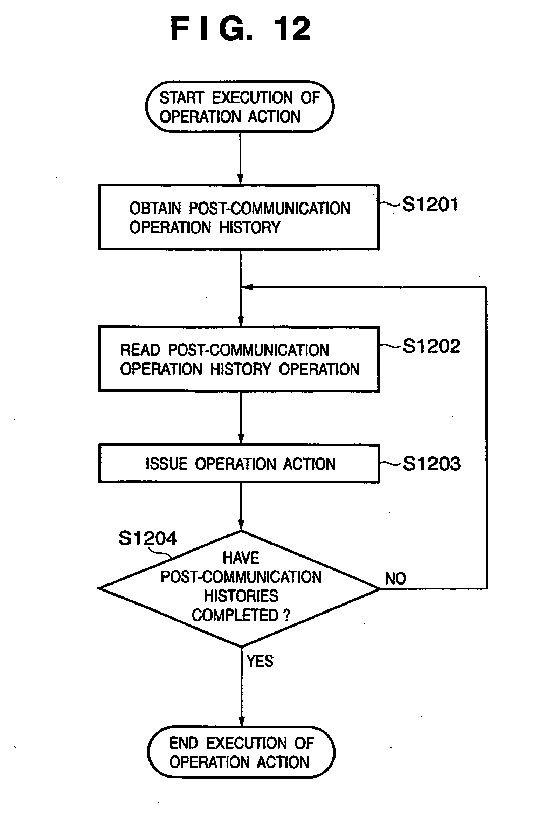

FIG. 12 is a flowchart showing the process at step S1010 shown in FIG. 10. First, at step S1201, the post-communication operation history of the accumulated communication-related operation history, which has been used when this operation action has been performed, is obtained. Next, at step S1202, individual operation history information is read from the obtained post-communication operation history, and is issued as the operation action onto the network at step S1203. At step S1204, it is determined whether or not all of the operation history information which exists in the post-communication operation history has been processed. If all of the operation history information has not been processed, the process at steps S1202 to S1204 is repeated, and all of the operation history information which exists in the post-communication operation history is issued as the operation actions.

Here, if the operations and the communication status shown in FIG. 11 have occurred, the operation action is executed at the step S1010 shown in FIG. 10, that is, the process shown in FIG. 12 is started. Next, based on the communication-related operation histories shown in FIG. 8, 813, 814 and 815 are read as associated post-communication operation history information, and are issued as the operation actions respectively onto the network at step S1203.

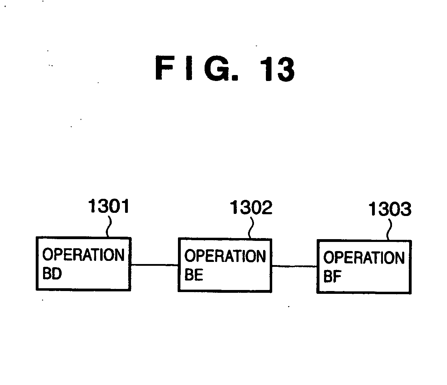

FIG. 13 is a diagram showing the operation actions to be issued onto the network by the process shown in FIG. 12, in the case where the operations and the communication status shown in FIG. 11 have occurred. In this example, 1301 to 1303 shown in FIG. 13 as issued as the operation actions. In other words, these operation actions are the operations of 813 to 815 shown in FIG. 8, which have been accumulated as the post-communication operation histories.

In this way, according to the first embodiment, in the network system, it is possible to extract and accumulate only the operation performed at the device on the network, which is accompanied with the communication and is accompanied with various operations before and after the communication, and the operation of the device related to the communication based on its communication status. By using the accumulated communication related operation history information, with respect to the operation which matches in a pre-communication operation or the communication status, it is possible to issue the operation as the operation action by the network management device 109, without having to perform the following operation by the user.

It should be noted that although the post-communication operation is issued as the operation action when the operation matches in both of pre-communication operation information and the communication status in the first embodiment, the first embodiment may also have a configuration in which the operation action is issued when the operation matches only in the pre-communication operation information, for example.

Moreover, although the post-communication operation is issued as the operation action when the operation matches in both of the pre-communication operation information and the communication status, the operation action may be issued by setting a matching condition of communication object information to a match in a category type of the communication object information and the like. By having such a configuration, it is possible to realize a similar operation action with respect to the communication object information of the same type even if the communication object is different in a precise sense. Thereby, it is possible to improve the convenience for the user.

Moreover, although when only the operation information related to the communication is extracted from the series of operation information, the match in the operation information is set as an extraction condition, the operation information may be described with an expression in which a meaning or a purpose of the operation is abstracted, and the extraction condition may be the match in the expression.

Moreover, as the abstracted expression, by using a verbal expression typically representing the operation of the device, for example, such as the expression of "display", "accumulate", "delete" or the like, it is possible to make an intelligible expression for the user to parse the description thereof, without depending on the operation information on a specific device.

Moreover, by setting the limitation of the device to a match in the type or the category of the device, the operation action accompanied with the same purpose with respect to another device may be issued if the meanings or the purposes of the operations match with each other even between devices whose makers are different and in which detailed operations are different.

Moreover, although it is possible to obtain detailed operation information with respect to all of the devices connected to the network, it is not limited to this if it is difficult to obtain the detailed operation information with respect to a specific device due to a constraint for security and the like. In other words, the first embodiment may also have a configuration in which the operation information to be obtained from the device is obtained with abstracted information, and concurrently with respect to the device, the obtained abstracted operation information is issued as the operation action to the above described device, and a concrete operation may be executed. By having such a configuration, it becomes possible to perform the operation action according to the match in the history information, while avoiding the constraint for the security.

Moreover, although a communication from one device to another device is assumed as the communication status, and the devices related to the communication are limited to these two devices, one to many communication, many to many communication and the like may be assumed as the communication. In that case, it becomes possible to extract the operation history information with respect to many more devices.

Moreover, the first embodiment has the configuration in which if it is determined that the executed operation and the operation history information which has been extracted and accumulated match with each other, or that their communication statuses match with each other, the operation action is issued instead of the user operation by using the post-communication operation history information in the operation history information. However, the first embodiment may also have a configuration in which an operation action which has been prepared differently from the operation history is associated, and the operation action is issued.

Moreover, although the network management device 109 for performing various processes is particularly arranged in order to obtain and accumulate the operation and the communication status performed on the network system, an arbitrary device which exists on the network may implement the function. Moreover, the first embodiment may also have a configuration in which a plurality of devices cooperatively express the function.

Moreover, although the accumulated communication related operation history information has been described as immovable, there may be provided a mechanism of updating the accumulated communication related operation history information according to the time elapsed. In other words, with respect to the operation detected on the network system, if the operation identical with the communication related operation history information exists, and the compared communication related operation history information is old, the newly detected operation is re-registered as the history. Thereby, it becomes possible to update so that a new operation action can be issued even for the same operation.

Moreover, although the time information attached to the operation information or the communication status information is used for determining the time range for limiting a range of the related operations when the communication related operation history information is extracted, the first embodiment may also have a configuration in which a relevance to the communication is extracted by detecting a match in time slot information. By having such a configuration, it is possible to accumulate even information in which the post-communication operation history information is different depending on the time slot in which the operation is performed, as an independent communication related operation history information. Even if the same operation has been performed in the network system again, it becomes possible to issue a different operation action, depending on the time slot in which the above described operation has been performed.

Moreover, it is possible to provide the operation information related to the communication, which is appropriate and more accurate based on the user's customary usage status.

Moreover, since a criterion for determining the match is mitigated, and the operation is compared with abstracted communication status history information and operation history information, it becomes possible to issue the similar operation action with respect to the operation accompanied with the similar communication performed by the user.

Moreover, it becomes possible to change a condition of executing the operation action to be stricter depending on the purpose of the user operation and the like, or to change to execute the similar operation action also with respect to a different operation.

Moreover, even if it is difficult to obtain the operation information with respect to a specific device, or even if the system does not have an access permission with respect to the specific device, it becomes possible to manage the information related to the operation as the abstracted information and instruct the operation action.

[Second Embodiment]
Next, the second embodiment according to the present invention will be described in detail with reference to the drawings. The first embodiment has the configuration in which the post-communication operation history information is identified with the match of the communication related operation history information and the performed communication, and the operation information which has been detected again on the network system and the communication status information, and then the operation action is issued.

In the second embodiment, it is determined whether or not the operation which has been performed in an individual device matches with the operation history information of the past. If the operation matches, sending the matched operation information onto the network is suppressed. Next, a communication which has occurred subsequently is attached with additional information and sent. The additional information indicates that the communication is according to the operation which has matched with the operation information existing in the accumulated communication related operation history information. Moreover, also in the network management device 109, it is determined whether or not there is the additional information in the communication which has occurred on the network system. If there is the additional information, specific pre-communication operation history is identified in the accumulated pre-communication operation history information, according to the additional information. Thereby, it is possible not to flow the operation which is related to the communication and is performed repeatedly, onto the network.

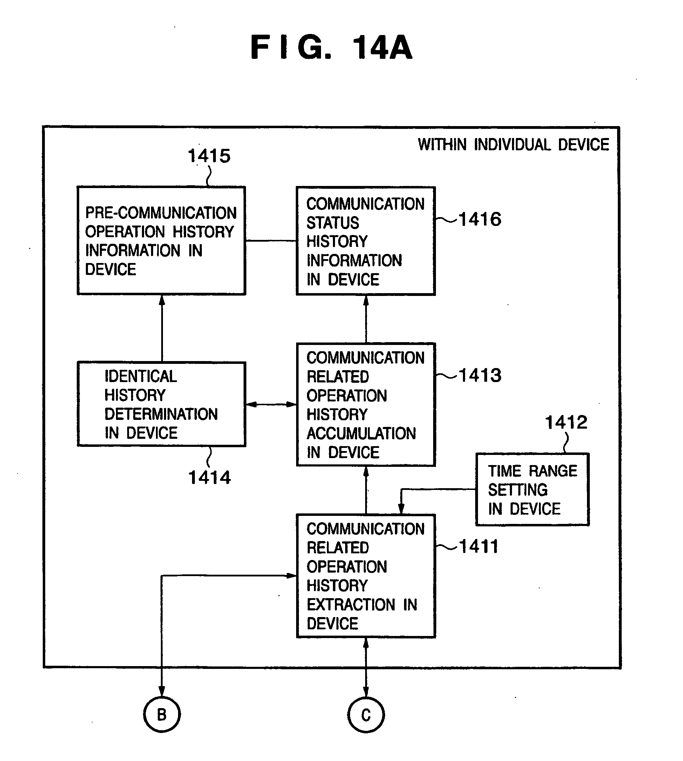

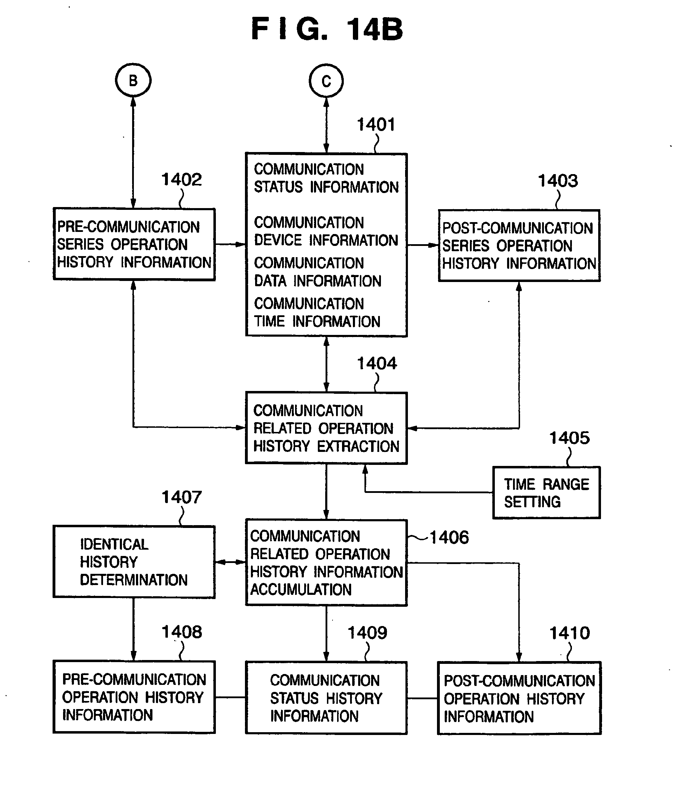

Here, by using FIGS. 14A and 14B, in addition to the process of the first embodiment, a process of the second embodiment will be described in which even within the individual device existing on the network system, an operation related to a communication which is related to the device itself, is extracted and accumulated as the operation history.

FIGS. 14A and 14B are block diagrams showing the process of extracting and accumulating the operation related to the communication which is related to the individual device, as the operation history within the device itself. Reference numerals 1401 to 1410 shown in FIG. 14B are similar to the process at reference numerals 401 to 410 shown in FIG. 4 in the network management device 109, which has been described in the first embodiment, and the description thereof is omitted.

In FIG. 14A, reference numerals 1411 to 1416 denote the process within the individual device. Reference numeral 1411 denotes an extraction unit for extracting, within a time range before a communication has been performed, which has been previously determined at 1412, only the operation history information related to the communication, among a series of pre-communication operation history information and communication status information at 1401 and 1402, within the device.

Reference numeral 1413 denotes an accumulation unit for classifying operation history information extracted by the extraction unit 1411, into operation history information before the communication is started (shown as 1415), and communication status history information 1416, and accumulating them respectively in order of time. Moreover, in the operation history information before the communication is started (shown as 1415), a determination unit 1414 determines whether or not an identical history exists in the communication related operation history information which has been already accumulated. The operation histories which are identical until partway are layered, classified and accumulated.

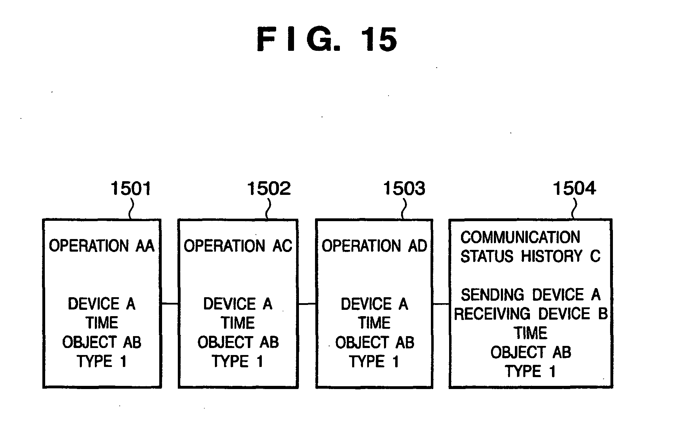

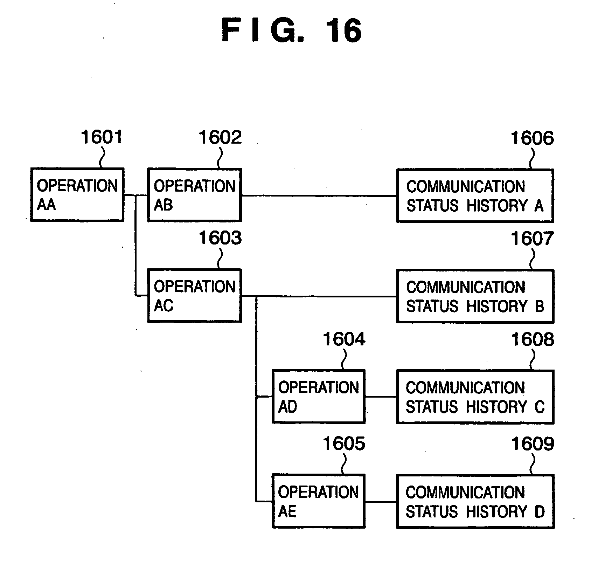

FIG. 15 is a diagram showing the communication related operation histories which have been extracted and accumulated within the device. Moreover, FIG. 16 is a diagram in which a description of the communication related operation histories shown in FIG. 15 is simplified and also other communication related operation histories, which are the identical operation histories until partway, are integrated with a hierarchical display. In other words, all operation histories which have an operation 1601 at the beginning are included in this hierarchical tree, and the operation 1601 is an operation AA in a device A, in which the operation object is AB and the operation object type is 1.

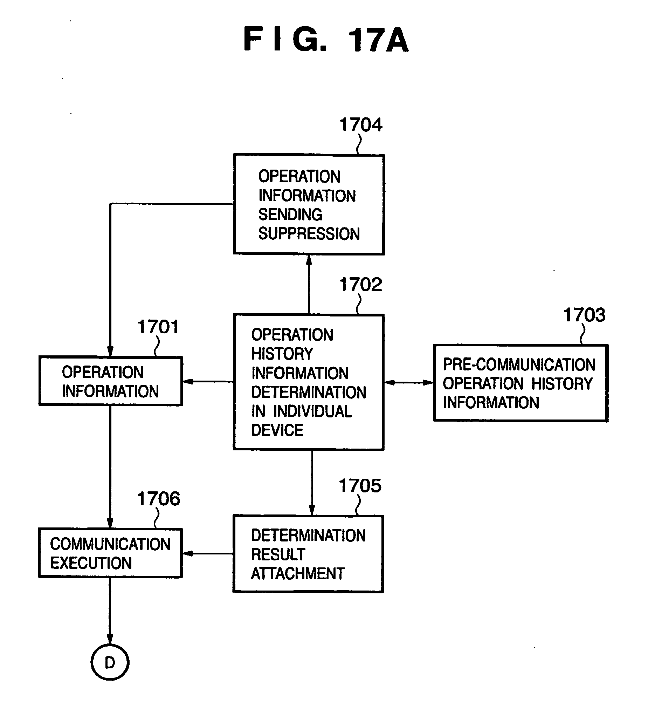

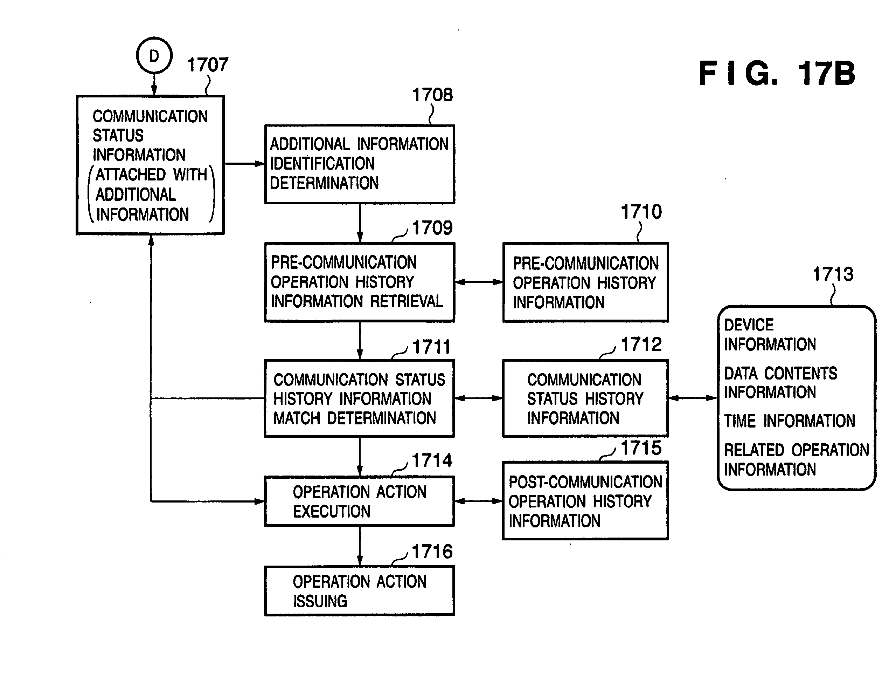

Next, by using FIGS. 17A and 17B, a process of executing the operation action at the individual device and the network management device 109, when the operation, which has matched with the communication related operation history information which has been already accumulated, has been performed in the individual device on the network system, will be described.

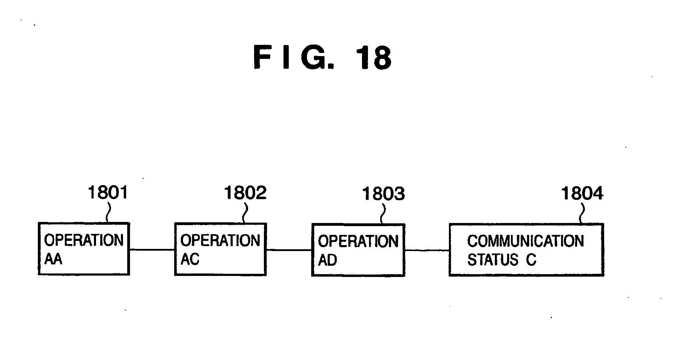

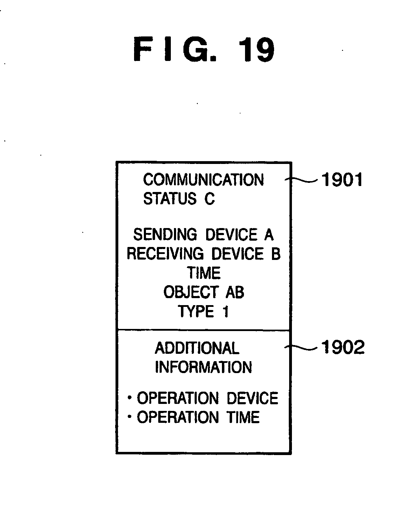

FIGS. 17A and 17B are block diagrams showing a process related to execution of the operation action in the second embodiment. In FIGS. 17A and 17B, reference numerals 1701 to 1706 denote the process within the individual device in which the operation has been performed, and reference numerals 1707 to 1716 denote the process at the network management device 109. In this individual device, when the operation has been performed, an operation history information determination unit 1702 determines whether or not the operation matches with the accumulated pre-communication operation history information, based on the pre-communication operation history information 1703. Here, if the operation matches with the accumulated pre-communication operation history information, an operation information sending suppression unit 1704 suppresses sending the operation information onto the network. After then, if the operation history information determination unit 1702 determines that the operation matches with the accumulated pre-communication operation history information until the end, a determination result attachment unit 1705 attaches information for identifying the pre-communication operation history information to a communication performed by a communication execution unit 1706. In other words, the operation performed in this individual device is a series of operations such as 1801 to 1803 shown in FIG. 18. Moreover, a communication status 1804 is a status of a communication which has been performed in the result. Information to be actually flowed onto the network system only includes a body of the communication, and a communication status 1901 and additional information 1902 shown in FIG. 19, which are detected from the communication.

After then, when communication status information (attached with additional information) 1707 shown in FIG. 17B is detected by the network management device 109, an additional information identification determination unit 1708 determines an existence of the additional information. Here, if the additional information exists, a pre-communication operation history information retrieval unit 1709 uses the additional information to retrieve and identify a specific pre-communication operation history from pre-communication operation history information 1710.

It should be noted that the additional information 1902 includes information for identifying the operation history information from the accumulated pre-communication operation history information in the network management device 109. Specifically, as shown in FIG. 19, the information is information for identifying the device in which the operation has been performed, time information in which an accumulated operation which has matched with the operation performed at this time has been performed, or the like.

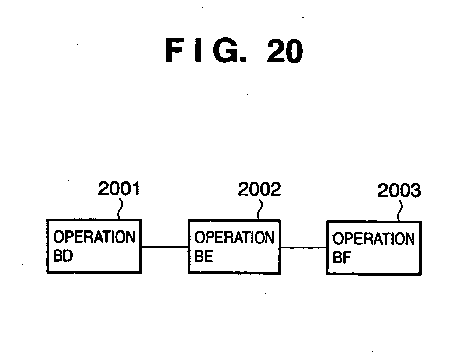

The process afterward is similar to the process at the network management device 109 after the match with the pre-communication operation history information has been confirmed, which has been described in the first embodiment. In other words, if a communication status history information match determination unit 1711 determines the match with the communication status information, and there is the match also here, an operation action execution unit 1714 performs the execution of the operation action based on post-communication operation history information 1715. Thereby, as shown in FIG. 20, operation actions 2001 to 2003 are issued onto the network by an operation action issuing unit 1716.

In this way, in each device, it is possible to identify the operation information related to the communication, and to reduce network traffic by using identification data instead of plural pieces of the operation information. Moreover, by attaching the identification data to the communication, it becomes possible to tighten a relevance between the both data. Furthermore, it becomes possible to hide a portion of the operation data from the network.

As described above, according to the second embodiment, in the network, when the operation accompanied with the communication which has been previously performed is repeatedly performed, if the operation has been accumulated as the communication related operation history information, it is possible not to flow the information on the operation onto the network. Also in this case, it becomes possible to execute the post-communication operation which has been accumulated in the communication related operation history information, as the operation action.

Moreover, although the second embodiment has the configuration in which a body of the communication performed between the devices is attached with the additional information, the second embodiment may also have a configuration in which the additional information is sent separately.

Moreover, although the second embodiment has the configuration in which the pre-communication operation information which has been accumulated in the communication related operation history information is not flowed onto the network by attaching the additional information to the body of the communication, also the post-communication operation information may be accumulated in the individual device. Furthermore, in the network management device 109, when the communication status information is obtained, the second embodiment may have a configuration in which also the post-communication operation information is not flowed onto the network, by sending the time information with which the post-communication operation history information can be identified, with respect to the device having the post-communication operation history information.

Moreover, when the accumulated communication related operation history information is identified, the operation history information is identified by attaching the information for identifying the device and the time information in which the accumulated operation has been performed as the additional information, the identification is not limited to this. In other words, the second embodiment may also have a configuration in which the operation history information is identified by attaching an ID for identifying the operation history information, instead of the time information, and unifying this between each device and the network management device 109. By having such a configuration, a status is avoided in which it becomes impossible to identify the operation history information due to a difference in a timer of each device and the like.

Moreover, although there is provided the information for identifying the device as the additional information, in addition to this, there may be provided category information indicating a type of the device or information on a function level which the device has. By having such a configuration, even in a status where an object device cannot be used when the communication is performed, it is possible to select the device of the same type or the device having the same function, start the communication with the device as an alternative device, and execute the operation action with the operation history information which has been further identified. Also it is possible to cause the user to select the alternative device, and carry through a desired operation without causing the user to perform the operation again.

Moreover, by replacing an abstracted information form with an ordinarily used language, there is an advantage in which the expression is practical and it becomes easy for the user to confirm the expression.

Moreover, when the identity of the communications has been determined, it becomes possible to specify the device which is different from the history information, by specifying a device of a communication destination according to the identification data, with respect to the device which becomes an object of the operation action to be executed.

Moreover, by enabling to select a device which has matched with wide specification information as the communication object, it becomes possible to expand the object to which the operation action is performed, and also it becomes possible to specify a plurality of devices simultaneously.

Moreover, even if a device desired by the user cannot be used, it becomes possible to specify the device having the same category or the same function as the communication object, and to perform an operation similar to the operation history as the operation action.

It should be noted that the present invention may be applied to a system configured with a plurality of devices (for example, a host computer, an interface device, a reader, a printer and the like), or applied to an apparatus consisting of one device (for example, a copying machine, a facsimile machine and the like).

Moreover, of course, the object of the present invention is also attained by supplying a recording medium having recorded thereon a program code of software for realizing the functions of the above described embodiments, to the system or the apparatus, and reading and executing the program code stored on the recording medium by a computer (a CPU or a MPU) of the system or the apparatus.

In this case, the program code itself read from the recording medium would realize the functions of the above described embodiments, and the recording medium having recorded thereon the program code would configure the present invention.

For the recording medium for supplying this program code, for example, it is possible to use a floppy (registered trademark) disk, a hard disk, an optical disk, a magneto optical disk, a CD-ROM, a CD-R, a magnetic tape, a non-volatile memory card, a ROM and the like.

Moreover, of course, not only the case where the functions of the above described embodiments are realized by executing the read program code by the computer, but also the case is included where an operating system (OS) operating on the computer or the like performs some or all of actual processes based on instructions of the program code and the functions of the above described embodiments are realized by the processes.

Furthermore, of course, the case is also included where, after the program code read from the recording medium is written into a function expansion board inserted into the computer or a memory provided on a function expansion unit connected to the computer, the CPU or the like provided on the function expansion board or the function expansion unit performs some or all of actual processes based on the instructions of the program code and the functions of the above described embodiments are realized by the processes.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A method for controlling execution of operations on a network (108) connecting a plurality of devices (101-107), the method comprising:
an acquisition step of acquiring an operation history (601-616) containing operation information (601-608, 610-616) on operations performed on the devices and communication status information (609) on communications performed between the devices;
wherein the communication status information (301) for a communication includes identification information indicating a sending device of the communication (A), identification information indicating a receiving device of the communication (B), information on a time at which the communication has been performed, identification information on a communicated object (AB), and communication status history information on the communication status history of the communication (C); and
wherein the operation information (201) for an operation includes identification information indicating a device on which the operation has been performed (A, B), information on a time at which the operation has been performed, identification information on an object which has been processed by the operation (AB), and an operation command representing the meaning or purpose of the operation (AA);
an extraction step of extracting and accumulating communication related operation history (801-817) from the acquired operation history (601-616), wherein said extraction step determines, for a communication (609; 1504) included in the acquired operation history, a sending device, a receiving device, a time of the communication, and information about a communicated object, and extracts for said communication from the acquired operation history a pre-communication operation history (408, 605, 606, 607; 1501-1503) of matching operations performed on the determined sending device before the communication is started and an associated post-communication operation history (410,612,615,616) of matching operations performed on the determined receiving device after the communication has finished,
with said matching being a matching between a communication object (AB) and an operation object (AB), and said extraction being performed for operations within a predetermined time range;
a determination step of determining, whether or not a series of newly occurred operations (1101, 1102, 1103) followed by a newly occurred communication (1104) matches, with respect to at least the operation commands (AA - AC - AD), a pre-communication operation history (903, 801, 803, 804) of a communication (905, 808) in the extracted and accumulated communication related operation history; and
an execution step of executing on a receiving device of the newly occurred communication a sequence of operations (1301-1303) having same operation commands (BD - BE - BF) as the post-communication operation history (910; 813, 814, 815) associated to the pre-communication history (903, 801, 803, 804) determined as matching in the determination step.

2. The method according to claim 1, wherein
determining matching in the determination step further includes a comparison of communication status history information for the communication in the communication related operation history and the newly occurred communication.

3. The method according to claim 1, wherein
determining matching in the determination step further includes a comparison of identification information for an object processed by an operation in a pre-communication operation history and for an object processed in the series of newly occurred operations.

4. The method according to claim 1, wherein
the communication status information further includes information indicating a type of the communicated object ("TYPE 1"),
the operation information further includes information indicating a type of the processed object ("TYPE 1"), and
determining matching in the determination step further includes a comparison of type information for an object processed by an operation in a pre-communication operation history and for an object processed in the series of newly occurred operations.

5. The method according to claim 1, wherein determining matching in the determination step includes a comparison of identification information or of type information for a device where an operation in a pre-communication operation history and a device where an operation in the series of newly occurred operations has been processed on.

6. The method according to claim 1, wherein the predetermined time range in which extraction is performed in the extraction step is a predetermined time range with respect to a communication included in the acquired operation history.

7. The method according to claim 1, wherein the operation information for an operation further includes an operation command option used along with the operation command.

8. The method according to claim 1, wherein the communication status information for a communication further includes information indicating a type of the communication.

9. The method according to claim 1, wherein the extraction step accumulates the extracted communication related operation histories in a hierarchical tree structure, based on matching types of operations from the respective beginnings of the histories.

10. The method according to claim 1, wherein on an individual device controlled by said method:
the acquisition step acquires an individual operation history containing operation information on operations performed on said individual device and communication status history information on communications having said individual device as a sending or a receiving device;
the extraction step extracts an individual communication related operation history (1601-1609) for a communication (1504) included in the acquired individual operation history by determining a time of the communication and information about a communicated object and extracting for said communication from the acquired individual operation history a pre-communication operation history (1501-1503) of matching operations, with said matching being a matching between a communication object and an operation object, and said extraction being performed for operations within a predetermined time range; and
the determination step determines whether or not a series of newly occurred operations (1801-1803) on said individual device followed by a newly occurred communication (1804) having said individual device as sending device matches the pre-communication operation history of a communication in the extracted and accumulated individual communication related operation history; and
wherein, in the case of a pre-communication history having been successfully matched in said determination, additional information (1902) related to the matched pre-communication operation history is flown onto the network, and said additional information is used for retrieving the matched pre-communication operation history and determining the sequence of operations to be executed in the execution step.

11. A network management device (109) comprising means for connecting to a network (108) connecting a plurality of devices (101-107) and being set up to execute for these devices (101-107) the controlling method as claimed in any one of claims 1 to 10.

12. A plurality of devices (101-107, 109) connectable via a network (108) and being set up to collectively execute the controlling method as claimed in any one of claims 1 to 10.

## Patentansprüche

1. Verfahren zum Steuern der Ausführung von Betriebsabläufen in einem mehrere Vorrichtungen (101 - 107) verbindenden Netzwerk (108), umfassend:
einen Erfassungsschritt zum Erfassen einer Betriebsablaufgeschichte (601-616), die Betriebsablaufinformation (601-608, 610-616) von Betriebsabläufen enthält, welche auf den Vorrichtungen ausgeführt wurden, ferner eine Kommunikationsstatusinformation (609) bezüglich zwischen den Vorrichtungen erfolgten Kommunikationen;
wobei die Kommunikationsstatusinformation (301) für eine Kommunikation folgendes beinhaltet: eine Identifikationsinformation, die eine sendende Vorrichtung der Kommunikation (A) angibt, eine Identifikationsinformation, die eine Empfangsvorrichtung der Kommunikation (B) angibt, eine Information über eine Zeit, zu der die Kommunikation stattgefunden hat, eine Identifikationsinformation bezüglich eines Kommunikationsobjekts (AB) und Kommunikationsstatus-Geschichtsinformation über die Kommunikationsstatusgeschichte der Kommunikation (C); und
wobei die Betriebsablaufsinformation (201) für einen Betriebsablauf folgendes beinhaltet: eine Identifikationsinformation, die eine Vorrichtung bezeichnet, auf der der Betriebsablauf ausgeführt worden ist (A, B), eine Information über eine Zeit, zu der der Betriebsablauf stattgefunden hatte, eine Identifikationsinformation bezüglich eines Objekts, welches durch den Betriebsablauf verarbeitet wurde (AB), und einen Betriebsablaufbefehl, der die Bedeutung oder den Zweck des Betriebsablaufs repräsentiert (AA);
einen Extraktionsschritt zum Extrahieren und Akkumulieren von kommunikationsbezogener Betriebsablaufgeschichte (801-817) aus der erfassten Betriebsablaufgeschichte (601-616), wobei der Extraktionsschritt für eine Kommunikation (609; 1504), die in der erfassten Betriebsablaufgeschichte enthalten ist, eine sendende Vorrichtung bestimmt, ferner, eine empfangende Vorrichtung, eine Zeit der Kommunikation und eine Information über ein Kommunikationsobjekt, und für die genannte Kommunikation aus der erfassten Betriebsablaufgeschichte eine Vor-Kommunikationsbetriebsablaufgeschichte (408, 605, 606, 607; 1501-1503) von Abgleichbetriebsabläufen extrahiert, welche, bevor die Kommunikation gestartet wird, in der bestimmten sendenden Vorrichtung stattgefunden haben, ferner eine zugehörige Nach-Kommunikationsbetriebsablaufgeschichte (410, 612, 615, 616) von Abgleichbetriebsabläufen, die in der bestimmten empfangenden Vorrichtung abgelaufen sind, nachdem die Kommunikation beendet worden ist,
wobei besagter Abgleich ein Abgleich zwischen einem Kommunikationsobjekt (AB) und einem Betriebsablaufobjekt (AB) ist und die Extraktion für Betriebsabläufe innerhalb eines vorbestimmten Zeitbereichs erfolgt;
einen Bestimmungsschritt zum Bestimmen, ob, oder nicht, eine Folge neuerlich aufgetretener Betriebsabläufe (1101, 1102, 1103), gefolgt von einer neuerlich aufgetretenen Kommunikation (1104), abgeglichen ist bezüglich der Betriebablaufbefehle (AA - AC - AD) einer Vor-Kommunikationsbetriebsablaufgeschichte (903, 801, 803, 804) und/oder einer Kommunikation (905, 808) in der extrahierten und akkumulierten kommunikationsbezogenen Betriebsablaufgeschichte; und
einen Ausführungsschritt, um in einer empfangenden Vorrichtung der neuerlich aufgetretenen Kommunikation eine Folge von Betriebsabläufen (1301-1303) auszuführen, und zwar mit den gleichen Betriebsablaufbefehlen (BD - BE - BF) wie der Nach-Kommunikationsbetriebsablaufgeschichte (910; 813, 814, 815) in Verbindung mit der als in dem Bestimmungsschritt übereinstimmend festgestellten Vor-Kommunikationsgeschichte (903, 801, 803, 804).

2. Verfahren nach Anspruch 1, wobei
die Abgleich-Bestimmung in dem Bestimmungsschritt außerdem einen Vergleich der Kommunikationsstatus-Geschichtsinformation für die Kommunikation in der kommunikationsbezogenen Betriebsablaufgeschichte und der neuerlich aufgetretenen Kommunikation beinhaltet.

3. Verfahren nach Anspruch 1, wobei
das Abgleich-Bestimmen innerhalb des Bestimmungsschritts weiterhin einen Vergleich der Identifikationsinformation für ein durch einen Betriebsablauf verarbeitetes Objekt in der Vor-Kommunikationsbetriebsablaufgeschichte und für ein in der Folge neuerlich aufgetretener Betriebsabläufe verarbeitetes Objekt beinhaltet.

4. Verfahren nach Anspruch 1, wobei
die Kommunikations-Statusinformation außerdem eine Information enthält, welche einen Typ des Kommunikationsobjekts ("TYPE 1 ") angibt,
die Betriebablaufinformation außerdem eine Information enthält, welche einen Typ des verarbeiteten Objekts ("TYPE 1 ") angibt, und
die Abgleichbestimmung in dem Bestimmungsschritt außerdem einen Vergleich einer Typeninformation für ein von einem Betriebsablauf in der Vor-Kommunikationsbetriebsablaufgeschichte verarbeitetes Objekt und für ein in der Folge neuerlich aufgetretener Betriebsabläufe verarbeitetes Objekt beinhaltet.

5. Verfahren nach Anspruch 1,
wobei die Abgleichbestimmung in dem Bestimmungsschritt einen Vergleich von Identifikationsinformation oder Typeninformation für eine Vorrichtung beinhaltet, in welcher ein Betriebsablauf in einer Vor-Kommunikationsbetriebsablaufgeschichte verarbeitet wurde, und für eine Vorrichtung, in welcher ein Betriebsablauf in der Folge neuerlich aufgetretener Betriebabläufe verarbeitet wurde.

6. Verfahren nach Anspruch 1,
wobei der vorbestimmte Zeitbereich, in welchem eine Extraktion innerhalb des Extraktionsschritts durchgeführt wird, ein vorbestimmter Zeitbereich ist, und zwar bezüglich einer Kommunikation, die in der erfassten Betriebsablaufgeschichte beinhaltet ist.

7. Verfahren nach Anspruch 1,
wobei die Betriebsablaufinformation für einen Betriebsablauf außerdem eine Betriebsablaufbefehlsoption beinhaltet, welche zusammen mit dem Betriebsablaufbefehl verwendet wird.

8. Verfahren nach Anspruch 1,
wobei die Kommunikationsstatusinformation für eine Kommunikation außerdem eine Information, die einen Kommunikationstyp angibt, beinhaltet.

9. Verfahren nach Anspruch 1,
wobei der Extraktionsschritt die extrahierten kommunikationsbezogenen Betriebsablaufgeschichten in einer hierarchischen Baumstruktur akkumuliert auf der Grundlage von Abgleichtypen von Betriebsabläufen aus den jeweiligen Anfängen der Geschichten.

10. Verfahren nach Anspruch 1, wobei eine individuelle Vorrichtung durch folgendes Verfahren gesteuert wird:
der Erfassungsschritt erfasst eine individuelle Betriebsablaufgeschichte, die eine Betriebsablaufinformation über Betriebsabläufe enthält, welche in der individuellen Vorrichtung stattgefunden haben, ferner Kommunikationsstatus-Geschichtsinformation über Kommunikationen, bei denen die individuelle Vorrichtung eine sendende oder eine empfangende Vorrichtung war;
der Extraktionsschritt extrahiert eine individuelle kommunikationsbezogene Betriebsablaufgeschichte (1601-1609) für eine in der erfassten individuellen Betriebsablaufgeschichte enthaltene Kommunikation (1504) durch Bestimmen einer Zeit der Kommunikation und einer Information über ein Kommunikationsobjekt und durch Extrahieren für die genannte Kommunikation aus der erfassten individuellen Betriebsablaufgeschichte einer Vor-Kommunikationsbetriebsablaufgeschichte (1501-1503) für Abgleichsbetriebsabläufe, wobei besagter Abgleich ein Abgleich zwischen einem Kommunikationsobjekt und einem Betriebsablaufobjekt ist und die Extraktion für jene Betriebsabläufe durchgeführt wird, welche innerhalb des vorbestimmten Zeitbereichs liegen; und
der Bestimmungsschritt bestimmt, ob, oder nicht, eine Folge neuerlich aufgetretener Betriebsabläufen (1801-1803) in der individuellen Vorrichtung, gefolgt von einer neuerlich aufgetretenen Kommunikation (1804) mit der individuellen Vorrichtung als sendende Vorrichtung in der Vor-Kommunikationsbetriebsablaufgeschichte einer Kommunikation in der extrahierten und akkumulierten individuellen kommunikationsbezogenen Betriebsablaufgeschichte übereinstimmt; und
wobei für den Fall, dass bei der Bestimmung eine Vorkommunikationsgeschichte erfolgreich abgeglichen wurde, eine zusätzliche Information (1902) bezüglich der abgeglichenen Vor-Kommunikationsbetriebsablaufgeschichte in das Netzwerk eingespeist wird und die zusätzliche Information dazu verwendet wird, die übereinstimmende Vor-Kommunikationsbetriebsablaufgeschichte abzurufen und die Folge von Betriebsabläufen zur Ausführung in dem Ausführungsschritt zu bestimmen.

11. Netzwerk-Verwaltungseinrichtung (109), umfassend eine Einrichtung zur Verbindung mit einem Netzwerk (108), das mehrere Vorrichtungen (101-107) verbindet und eingerichtet ist zur Ausführung des Steuerverfahrens nach einem der Ansprüche 1 bis10 für diese Vorrichtungen (101-107).

12. Mehrere Vorrichtungen (101-107, 109), die über ein Netzwerk (108) verbindbar sind und eingerichtet sind zur kollektiven Ausführung des Steuerverfahrens nach einem der Ansprüche 1 bis 10.

## Revendications

1. Procédé pour commander l'exécution d'opérations sur un réseau (108) connectant une pluralité de dispositifs (101-107), le procédé comprenant :
une étape d'acquisition consistant à acquérir un historique des opérations (601-616) contenant des informations d'opérations (601-608, 610-616) concernant des opérations effectuées sur les dispositifs et des informations d'état des communications (609) concernant des communications effectuées entre les dispositifs ;
dans lequel les informations d'état des communications (301) concernant une communication comprennent des informations d'identification indiquant un dispositif émetteur de la communication (A), des informations d'identification indiquant un dispositif récepteur de la communication (B), des informations concernant un temps auquel la communication a été effectuée, des informations d'identification concernant un objet communiqué (AB), et des informations d'historique des états de la communication concernant l'historique des états de la communication (C) ; et
dans lequel les informations d'opérations (201), dans le cas d'une opération, comprennent des informations d'identification indiquant un dispositif sur lequel l'opération a été effectuée (A,B), des informations concernant un temps auquel l'opération a été effectuée, des informations d'identification concernant un objet qui a été traité par l'opération (AB) et une commande d'opération représentant le moyen ou le but de l'opération (AA) ;
une étape d'extraction consistant à extraire et à accumuler un historique (801-817) des opérations liées aux communications à partir de l'historique acquis des opérations (601-616), dans lequel ladite étape d'extraction détermine, pour une communication (609 ; 1504) contenue dans l'historique acquis des opérations, un dispositif émetteur, un dispositif récepteur, un temps de la communication et des informations concernant un objet communiqué, et extrait, pour ladite communication, dudit historique acquis des opérations un historique d'opérations de pré-communication (408, 605, 606, 607 ; 1501-1503) d'opérations correspondantes effectuées sur le dispositif émetteur déterminé avant le début de la communication et un historique d'opérations de post-communication associé (410, 612, 615, 616) d'opérations correspondantes effectuées sur le dispositif récepteur déterminé une fois la communication terminée,
ladite correspondance étant une correspondance entre un objet de communication (AB) et un objet d'opération (AB), et ladite extraction étant effectuée pour des opérations se situant dans un intervalle de temps prédéterminé ;
une étape consistant à déterminer si oui ou non une série d'opérations venant de se produire (1101, 1102, 1103) suivies par une communication venant de se produire (1104) correspond, vis-à-vis au moins des commandes d'opérations (AA - AC - AD), à un historique d'opérations de pré-communication (903, 801, 803, 804) d'une communication (905, 808) contenue dans l'historique extrait et accumulé des opérations liées aux communications ; et
une étape d'exécution consistant à exécuter, sur un dispositif récepteur de la communication venant de se produire, une séquence d'opérations (1301 - 1303) ayant les mêmes commandes d'opérations (BD - BE - BF) que l'historique d'opérations de post-communication (910 ; 813, 814, 815) associé à l'historique de pré-communication (903, 801, 803, 804) dont il est déterminé qu'il présente une correspondance lors de l'étape de détermination.

2. Procédé selon la revendication 1, dans lequel :
la détermination d'une correspondance lors de l'étape de détermination comprend en outre une comparaison d'informations d'historique des états de communication pour la communication contenue dans l'historique des opérations liées aux communications et pour la communication venant de se produire.

3. Procédé selon la revendication 1, dans lequel :
la détermination d'une correspondance lors de l'étape de détermination comprend en outre une comparaison d'informations d'identification pour un objet traité par une opération dans un historique d'opérations de pré-communication et pour un objet traité dans la série d'opérations venant de se produire.

4. Procédé selon la revendication 1, dans lequel :
les informations d'état des communications comprennent en outre des informations indiquant un type de l'objet communiqué ("TYPE 1"),
les informations d'opérations comprennent en outre des informations indiquant un type de l'objet traité ("TYPE 1"), et
la détermination d'une correspondance lors de l'étape de détermination comprend en outre une comparaison d'informations de type pour un objet traité par une opération contenue dans un historique d'opérations de pré-communication et pour un objet traité dans la série d'opérations venant de se produire.

5. Procédé selon la revendication 1, dans lequel la détermination d'une correspondance lors de l'étape de détermination comprend une comparaison d'informations d'identification ou d'informations de type pour un dispositif sur lequel un historique des opérations de pré-communication a été traité et pour un dispositif sur lequel une opération de la série d'opérations venant de se produire a été traitée.

6. Procédé selon la revendication 1, dans lequel l'intervalle de temps prédéterminé au cours duquel une extraction est effectuée lors de l'étape d'extraction est un intervalle de temps prédéterminé par rapport à une communication incluse dans l'historique acquis des opérations.

7. Procédé selon la revendication 1, dans lequel les informations d'opérations concernant une opération comprennent en outre une option d'une commande d'opération utilisée en association avec la commande d'opération.

8. Procédé selon la revendication 1, dans lequel les informations d'état des communications concernant une communication comprennent en outre des informations indiquant un type de la communication.

9. Procédé selon la revendication 1, dans lequel l'étape d'extraction accumule les historiques d'opérations liées aux communications extraits dans une structure arborescente hiérarchique, sur la base de types correspondants d'opérations provenant des débuts respectifs des historiques.

10. Procédé selon la revendication 1, dans lequel, sur un dispositif individuel commandé par ledit procédé :
l'étape d'acquisition acquiert un historique d'opérations individuelles contenant des informations d'opérations effectuées sur ledit dispositif individuel et des informations d'historiques d'états des communications concernant des communications pour lesquelles ledit dispositif individuel est un dispositif émetteur ou un dispositif récepteur ;
l'étape d'extraction extrait un historique d'opérations liées à des communications individuelles (1601-1609) pour une communication (1504) incluse dans l'historique acquis des opérations individuelles en déterminant un temps de la communication et des informations concernant un objet communiqué et en extrayant, pour ladite communication, de l'historique acquis des opérations individuelles, un historique d'opérations de pré-communication (1501-1503) d'opérations correspondantes, ladite correspondance étant une correspondance entre un objet de communication et un objet d'opération, et ladite extraction étant effectuée pour des opérations se situant dans un intervalle de temps prédéterminé ; et
l'étape de détermination détermine si oui ou non une série d'opérations venant de se produire (1801-1803) sur ledit dispositif individuel, suivie d'une communication venant de se produire (1804) pour laquelle ledit dispositif individuel est un dispositif émetteur, correspond à l'historique d'opérations de pré-communication d'une communication contenue dans l'historique extrait et accumulé des opérations individuelles liées à des communications ; et
dans lequel, dans le cas où il a été possible d'établir une correspondance avec l'historique de pré-communication lors de ladite détermination, lesdites informations supplémentaires (1902) concernant l'historique d'opérations de pré-communication ayant une correspondance sont envoyées sur le réseau, et lesdites informations supplémentaires sont utilisées pour obtenir l'historique d'opérations de pré-communication ayant une correspondance et pour déterminer la séquence d'opérations devant être exécutées lors de l'étape d'exécution.

11. Dispositif de gestion de réseau (109) comprenant un moyen destiné à être connecté à un réseau (108)connectant une pluralité de dispositifs (101-107) et étant configuré pour exécuter, pour ces dispositifs (101-107), le procédé de commande selon l'une quelconque des revendications 1 à 10.

12. Pluralité de dispositifs (101-107, 109) pouvant être connectés par l'intermédiaire d'un réseau (108) et configurés de façon à exécuter collectivement le procédé de commande selon l'une quelconque des revendications 1 à 10.
